# EUROPÄISCHE PATENTSCHRIFT

(11) **EP 0 448 833 B1**
(45) Veröffentlichungstag und Bekanntmachung des Hinweises auf die Patenterteilung: **31.08.1994**
(21) Anmeldenummer: 90125254.4
(22) Anmeldetag: 21.12.1990
(51) Int. Cl.: F16F 9/05

(54) **Rollbalg-Luftfeder mit einem verstärkten Rollbalg**
Rolling-lobe airspring with a reinforced rolling lobe
Ressort pneumatique à soufflet roulant renforcé

(30) Priorität: 24.03.1990 DE 4009495
(43) Veröffentlichungstag der Anmeldung: 02.10.1991
(73) Patentinhaber: Continental Aktiengesellschaft, 30165 Hannover (DE)
(72) Erfinder: Drescher, Gunter, W-3000 Hannover 91 (DE)
(74) Vertreter: Schneider, Egon

(56) Entgegenhaltungen:
- EP-A- 0 262 079
- DE-A- 2 515 254
- DE-A- 2 904 521
- DE-B- 1 127 233
- FR-A- 2 515 295
- GB-A- 818 604
- US-A- 4 807 858

## Beschreibung

Die Erfindung betrifft eine Rollbalg-Luftfeder gemäß dem Oberbegriff des Patentanspruchs 1.

Rollbalg-Luftfedern sind in einer Vielzahl von Ausführungsformen bekannt und haben sich z. B. als Fahrzeugfederungen, insbesondere zur Abfederung der Radachsen von Lastkraftwagen und Autobussen, in großem Umfang bewährt. Die Rollbälge sind mindestens an einem Ende an einem Abrollkolben befestigt, der gewöhnlich aus Metall oder Kunststoff gefertigt ist. Im Betriebszustand bewegt sich der Kolben innerhalb des Rollbalges, der sich umstülpt und eine Rollfalte bildet, die über der Außenfläche des Abrollkolbens abrollt. Herstellung und Montage des Abrollkolbens bedeuten einen erheblichen technischen Aufwand. Der Abrollkolben trägt zu dem Gesamtgewicht der Rollbalg-Luftfeder bei. Bisherige Bemühungen, das Gewicht der Rollbalg-Luftfeder zu reduzieren, führten zur Verwendung leichterer Kolben-Werkstoffe sowie verschiedenen konstruktiven Lösungen des Abrollkolbens.

Aus der US-A- 4 807 858 ist eine Rollbalg-Luftfeder der eingangs genannten Gattung bekannt.

Aus der DE -A- 25 15 254 ist es bekannt, zur Begrenzung der radiales Dehnung eines Rollbalges eine gürtelartige, zusätliche Gewebelage umfangsmäßig in die Balgwand einzubetten. Die zusätzliche Gewebelage endet mit Abstand zu den Endabschnitten des Rollbalges und verhindert eine Erhöhung des äußeren Durchmessers des unter einem inneren überdruck stehenden Rollbalges.

Der Erfindung liegt die Aufgabe zugrunde, eine Rollbalg-Luftfeder der eingangs genannten Art zu schaffen, bei der der technische Aufwand bezüglich Herstellung und Montage verringert und das Gewicht reduziert ist.

Die Aufgabe wird erfindungsgemäß durch die im Kennzeichen des Patentanspruchs 1 genannten Merkmale gelöst.

Der formstabile Balgwandabschnitt des Rollbalges übernimmt die Funktion des bisher verwendeten Abrollkolbens. Durch geeignete Verstärkungen des Balgwandabschnittes verhält sich dieser im Betrieb der Luftfeder unter Druckbeaufschlagung formstabil. Der flexible Rollbalg rollt über den verstärkten Balgwandabschnitt, der einen integrierten Abrollkolben darstellt, ab. Der Rollbalg rollt also über sich selbst ab. Die Rollfalte des Rollbalges stützt sich auf dem verstärkten Balgwandabschnitt ab.

Durch die Erfindung wird der Anteil aufwendig herzustellender und zu montierender Armaturteile der Luftfeder verringert. Es ist nur noch eine Basisplatte zur Befestigung des verstärkten Balgwandabschnittes notwendig. Durch eine entsprechend ausgebildete Verstärkung ist es möglich, dem Balgwandabschnitt eine von der zylindrischen abweichende definierte Kontur zu geben.

In vorteilhafter Ausgestaltung der Erfindung weisen beide Endbereiche des Rollbalges erhöht verstärkte, formstabile Balgwandabschnitte auf. Diese Ausführung entspricht einer Luftfeder mit Doppelkolben.

In vorteilhafter Ausgestaltung der Erfindung entspricht die Länge des verstärkten Balgwandabschnittes mindestens dem Federweg der Luftfeder. Durch diese Maßnahme kann die Rollfalte im Betrieb während des Aus- und Einfederns auf dem verstärkten Wandabschnitt abrollen.

In weiterer vorteilhafter Ausgestaltung der Erfindung weist der verstärkte Balgwandabschnitt eine im elastomeren Werkstoff der Balgwand eingebettete Drahtwendel auf.

Die Drahtwendel kann in der Herstellung durch Aufspulen einfach aufgebracht werden. Drahtcord hat zudem eine gute Verbindung zum elastomeren Werkstoff.

Eine weitere Verstärkungsmöglichkeit des Balgwandabschnittes kann durch eine in die Balgwand eingebettete zylindrische Metallhülse erreicht werden. Durch entsprechende Formgebung der Hülse kann in vorteilhafter Weise eine gewünschte Kontur des verstärkten Balgwandabschnittes erzielt werden.

Rollbalg-Luftfedern weisen häufig einen Rollbalg auf, in dessen Balgwand sich über die gesamte Länge des Rollbalgs erstreckende Gewebelagen eingebettet sind. Diese Gewebelagen sind aus Textilcordfäden aufgebaut, wobei sich die Fäden der einen Lage mit den Fäden der anderen Lage kreuzen. Wird ein derartiger Rollbalg gemäß den Merkmalen im Kennzeichen des Anspruchs 6 ausgestaltet, wird die ansonsten vorliegende Veränderung des Gewebewinkels aufgrund der sich permanent bewegenden Luftfeder unterdrückt. Die Verhinderung der Winkeländerung erhöht die Formstabilität des Balgwandabschnittes.

Eine weitere vorteilhafte Ausgestaltung der Erfindung wird im Kennzeichen des Patentanspruchs 7 offenbart. Durch das Anbringen eines Umlenkringes wird ein definierter Umlenkpunkt für die Rollfalte des Rollbalges erreicht. Der Umlenkring kann in die Balgwand eingebettet oder von außen an die Balgwand anvulkanisiert sein.

Gemäß der Ausführungsform im Anspruch 8 ist im Bereich des verstärkten Balgwandabschnittes ein innenliegender Stützring angeordnet, dessen Ringwand am Balgabschnitt anliegt. Durch diesen Stützring wird eine weitere Versteifung des Balgwandabschnittes erreicht.

Eine weitere vorteilhafte Ausgestaltung der Erfindung wird in dem Unteranspruch 9 gekennzeichnet. Die reibungsvermindernde Schicht verhindert einen Schädlichen Abrieb der aufeinande ablaufenden Gummischichten. Durch die vorteilhafte Ausgestaltung der Erfindung gemäß dem Unteranspruch 10 ist auch die Befestigungsart des Bördelns für den Rollbalg mit formstabilen Balgwandabschnitt anwendbar.

Durch die Erfindung wird ein Rollbalg für eine Rollbalg-Luftfeder geschaffen, der sich mit seiner Rollfalte über den verstärkten Balgwandabschnitt, also über sich selbst, abrollt. Die Länge des verstärkten Balgwandabschnittes wird entsprechend des jeweiligen Einsatzzweckes der Rollbalg-Luftfeder bestimmt und ausgelegt.

Anhand der Zeichnung werden einige Ausführungsbeispiele der Erfindung näher erläutert. Es zeigt
- Fig. 1: im Teillängsschnitt einen Rollbalg mit Wulstringen an seinen Enden,
- Fig. 2: im Teillängsschnitt einen Schlauchrollbalg, der an seinen Enden über Spannringe an Armaturen befestigt ist,
- Fig. 3: in schematischer Darstellung das Prinzip der Gewebelagen im verstärkten Balgwandabschnitt,
- Fig. 4: in vergrößerter Darstellung einen Längsschnitt durch die Wand des Balgwandabschnittes aus Fig. 3,
- Fig. 5: einen zwischen zwei Befestigungsflanschen eingespannten Rollbalg mit Umlenkring,
- Fig. 6: einen eingespannten Rollbalg mit im Bereich des verstärkten Balgwandabschnittes liegenden Stützring.

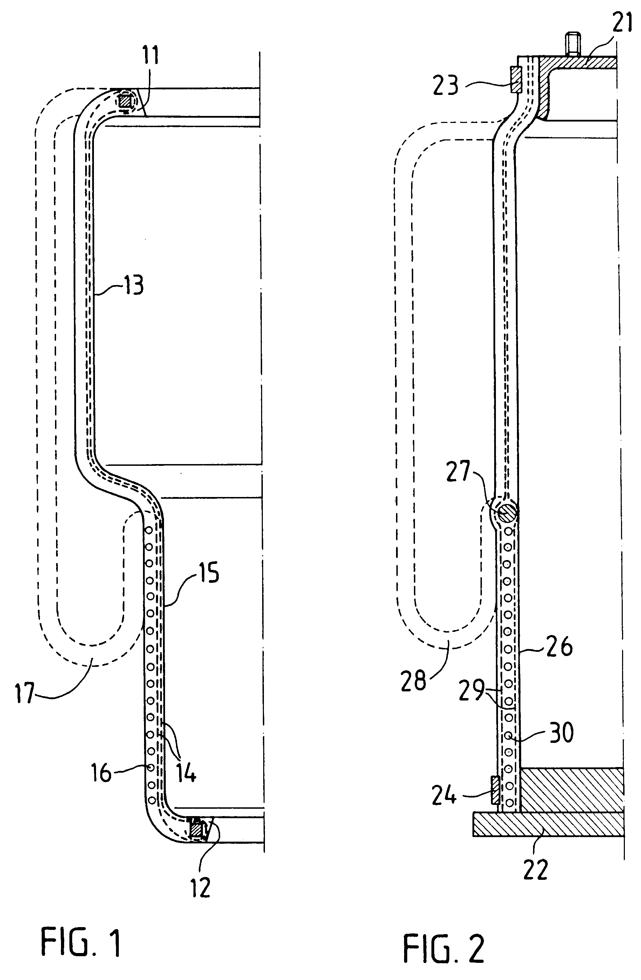

Der in der Fig. 1 gezeigte Rollbalg ist an seinen beiden Enden im Durchmesser eingezogen und mit Befestigungswulsten 11 und 12 versehen. Die durchgezogene Darstellung der Rollbalgkontur entspricht der Herstellkontur. Die Abrollkontur im Betrieb der Luftfeder ist strichpunktiert dargestellt. Die Balgwand 13 des Rollbalges ist über die gesamte Länge des Rollbalges von gleichbleibender Dicke. In der Balgwand 13 verlaufen zwei Festigkeitsträgerlagen 14. Im unteren Endbereich weist der Rollbalg einen verstärkten Balgwandabschnitt 15 auf. Zusätzlich zu den durchlaufenden Festigkeitsträgerlagen 14 ist eine wendelartige Drahtcordlage 16 in diesem Abschnitt der Balgwand die beiden Festigkeitsträgerlagen 14 umfassend eingebettet.

Im Betrieb der Rollbalg-Luftfeder bildet sich die Rollfalte 17, die beim Ein- und Ausfedern über den verstärkten, formstabilen Balgwandabschnitt 15 abrollt.

Die in der Fig. 2 gezeigte Ausführungsform weist einen Schlauchrollbalg auf, der mit seinen Enden zwischen zwei Befestigungsflanschen 21 und 22 mittels aufgebrachter Spannringe 23 und 24 eingespannt ist. Der formstabile, verstärkte Balgwandabschnitt 26 wird an seinem zum Hauptteil des Schlauchrollbalges liegenden Ende von einem in die Wand eingebetteten Umlenkring 27 begrenzt. Zwischen den beiden Festigkeitsträgerlagen 29 ist eine wendelartige Drahtcordlage 30 angeordnet. Im Betrieb der Luftfeder bildet sich definiert am Umlenkring 27 die Rollfalte 28 aus.

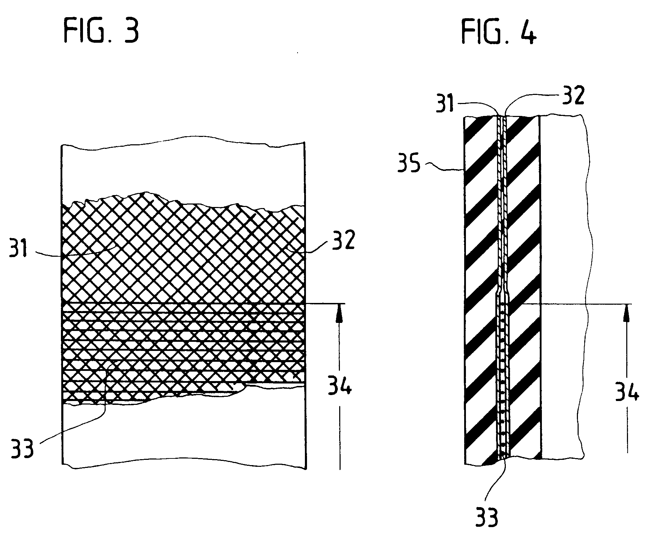

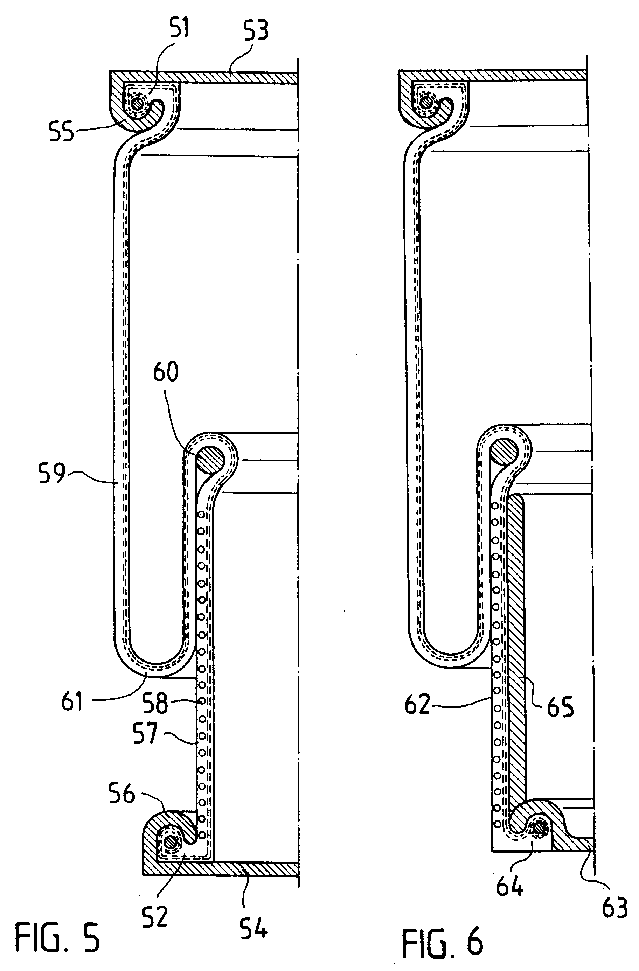

In der Fig. 3 wird schematisch dargestellt, wie zwei Textilcordgewebebahnen 31 und 32 als Festigkeitsträgerlagen in der Balgwand kreuzweise übereinander angeordnet sind. Der Fadenwinkel zwischen den Gewebelagen beträgt ca. 40-80° zur Umfangsrichtung. Der Fadenwinkel für die beiden kreuzweise eingebauten Textilcordgewebelagen 31 und 32 ist von großer Bedeutung für die Eigenschaft der Luftfeder. Mit dem Fadenwinkel können Tragkraft und Seitenkraft verändert werden. üblicherweise werden meist zwei durchlaufende Gewebelagen verwendet, es sind aber auch vier oder mehr Gewebelagen möglich. Zwischen diesen beiden Gewebelagen ist eine dritte Textilcordlage 33 eingebettet, deren Fäden in Umfangsrichtung ausgerichtet sind. Die dritte Textilcordlage 33 beschränkt sich auf einen Balgwandabschnitt 34, der sich an ein Ende des Rollbalges anschließt. Die Wand 35 des verstärkten Balgwandabschnittes 34 ist durch das Anordnen von drei Gewebelagen (Fig. 4) formstabil ausgebildet.

In der Fig. 5 wird ein Rollbalg im Betriebszustand dargestellt. Der Rollbalg ist mit zwei an seinen Enden angebrachten Befestigungswülsten 51 und 52 zwischen zwei Befestigungsarmaturen 53 und 54 durch Umbördelungen 55 und 56 eingespannt. Ausgehend von der unteren Einspannung 52, 56 erstreckt sich ein formstabilen Balgwandabschnitt 57, der eine Verstärkung durch eine Drahtcordlage 58 aufweist. Am Ende des formstabilen Balgwandabschnittes 57 ist ein Umlenkring 60 außen an der Balgwand 59 anvulkanisiert. Dieser Umlenkring definiert den Beginn der sich im Betrieb der Luftfeder einstellenden Rollfalte 61.

Die in Fig. 6 gezeigte Ausführungsform unterscheidet sich von der Fig. 5 dadurch, daß die untere Einspannung des formstabilen Balgwandabschnittes 62 an einem Befestigungsflansch 63 über einen innenliegenden Befestigungswulst 64 erreicht wird. Der formstabile Balgwandabschnitt 62 wird innen durch einen anliegenden Stützring 65 zusätzlich abgestützt.

## Patentansprüche

1. Rollbalg-Luftfeder mit einem aus elastomerem Werkstoff mit eingebettet er Festigkeitsträgerlage (14) gebildeten Rollbalg, dessen beide Enden jeweils an einer Armatur befestigt sind und der unter normalen Arbeitsbedingungen eine sich beim Ein- und Ausfedern der Rollbalg-Luftfeder ändernde, sich auf einer Wand abstützende Rollfalte (17; 28; 61) bildet,
**dadurch gekennzeichnet,**
daß ein Endbereich des Rollbalges, der der Rollfalte (17; 28; 61) zugewandt ist, als erhöht verstärkter Balgwandabschnitt (15; 26) ausgebildet ist, der gegenüber dem Luftfederinnendruck und der Außenbelastung durch die auf diesem verstärkten Balgwandabschnitt (15; 26) ablaufende Rollfalte (17; 28) formstabil ist.

2. Rollbalg-Luftfeder nach Anspruch 1, dadurch gekennzeichnet, daß beide Endbereiche des Rollbalges erhöht verstärkte, formstabile Balgwandabschnitte aufweisen.

3. Rollbalg-Luftfeder nach Anspruch 1, dadurch gekennzeichnet, daß die Länge des formstabilen Balgwandabschnittes mindestens dem Federweg der Rollbalg-Luftfeder entspricht.

4. Rollbalg-Luftfeder nach Anspruch 1 oder 2, dadurch gekennzeichnet, daß der formstabile Balgwandabschnitt (15; 26) eine in elastomerem Werkstoff eingebettete Drahtwendel (16; 30) aufweist.

5. Rollbalg-Luftfeder nach einem der Ansprüche 1 bis 3, dadurch gekennzeichnet, daß der formstabile Balgwandabschnitt (15) eine in elastomerem Werkstoff eingebettete zylindrische Metallhülse aufweist.

6. Rollbalg-Luftfeder nach Anspruch 1 oder 2 mit zwei in der Balgwand über die gesamte Länge des Rollbalgs eingebetteten Gewebelagen aus unter einem Winkel zur Rollbalglängsachse angeordneten Textilcordfäden, wobei sich die Fäden der einen Lage mit den Fäden der anderen Lage kreuzen, dadurch gekennzeichnet, daß der formstabile Balgwandabschnitt (34) eine dritte Gewebelage (33) aufweist,
daß die dritte Gewebelage (33) zwischen den beiden Gewebelagen (31, 32) mit sich kreuzender Fadenlage angeordnet ist,
daß die Cordfäden der dritten Gewebelage (33) in einem von den Winkellagen der sich kreuzenden Gewebelagen (31, 32) unterschiedlichen Winkel, vorzugsweise in axialer Richtung oder in Umfangsrichtung, angeordnet sind.

7. Rollbalg-Luftfeder nach einem der Ansprüche 1 bis 6, dadurch gekennzeichnet, daß zwischen dem Ende des formstabilen Balgwandabschnittes (26; 57) und dem sich anschließenden Rollbalghauptkörper ein Umlenkring (27; 60) in der Balgwand oder außen an der Balgwand angeordnet ist.

8. Rollbalg-Luftfeder nach einem der Ansprüche 1 bis 7, dadurch gekennzeichnet, daß im Bereich des formstabilen Balgwandabschnittes (62) ein innenliegender Stützring (65) angeordnet ist, dessen Ringwand am formstabilen Balgwandabschnitt (62) anliegt.

9. Rollbalg-Luftfeder nach einem der Ansprüche 1 bis 8, dadurch gekennzeichnet, daß der Außenmantel des formstabilen Balgwandabschnittes (15; 26; 57; 62) mit einer reibungsvermindernden Schicht versehen ist.

10. Rollbalg-Luftfeder nach einem der Ansprüche 1 bis 9, dadurch gekennzeichnet, daß der formstabile Balgwandabschnitt (57; 62) am freien Ende mit einer Befestigungswulst (52; 64) versehen ist, die von einer umlaufenden Bördel (56) der Befestigungsarmatur (54; 63) umfaßt ist.

## Claims

1. Roller bellows air spring having a roller bellows, which is formed from elastomeric material with a reinforcing ply (14) embedded therein, each of the two ends of said roller bellows being mounted on a respective fitting, and said roller bellows forms, under normal operational conditions, a roller fold (17, 28, 61), which varies during the inward and outward travel movement of the roller bellows air spring and is supported on a wall, characterised in that an end region of the roller bellows, which faces the roller fold (17, 28, 61), is formed as a considerably reinforced bellows wall portion (15; 26), which is rigid relative to the internal pressure of the air spring and the external load as a result of the roller fold (17; 28), which extends to this reinforced bellows wall portion (15, 26).

2. Roller bellows air spring according to claim 1, characterized in that both end regions of the roller bellows have considerably reinforced, rigid bellows wall portions.

3. Roller bellows air spring according to claim 1, characterised in that the length of the rigid bellows wall portion corresponds to at least the travel stroke of the roller bellows air spring.

4. Roller bellows air spring according to claim 1 or 2, characterised in that the rigid bellows wall portion (15; 26) has a wire coil (16; 30) which is embedded in elastomeric material.

5. Roller bellows air spring according to one of claims 1 to 3, characterized in that the rigid bellows wall portion (15) has a cylindrical metal sleeve which is embedded in elastomeric material.

6. Roller bellows air spring according to claim 1 or 2 having two fabric plies, which are embedded in the bellows wall over the entire length of the roller bellows and are formed from textile cord filaments disposed at an angle relative to the longitudinal axis of the roller bellows, the filaments on one ply intersecting with the filaments of the other ply, characterised in that the rigid bellows wall portion (34) has a third fabric ply (33), in that the third fabric ply (33) is disposed between the two fabric plies (31, 32) and is provided with an intersecting filament ply, and in that the cord filaments of the third fabric ply (33) are disposed at an angle, preferably in the axial direction or in the circumferential direction, which angle differs from the angular positions of the intersecting fabric plies (31, 32).

7. Roller bellows air spring according to one of claims 1 to 6, characterised in that a guide ring (27; 60) is disposed in the bellows wall or externally on the bellows wall between the end of the rigid bellows wall portion (26; 57) and the communicating main bodies of the roller bellows.

8. Roller bellows air spring according to one of claims 1 to 7, characterised in that an internally situated supporting ring (65) is disposed in the region of the rigid bellows wall portion (62), the annular wall of said supporting ring abutting against the rigid bellows wall portion (62).

9. Roller bellows air spring according to one of claims 1 to 8, characterized in that the external surface of the rigid bellows wall portion (15; 26; 57; 62) is provided with a friction-reducing layer.

10. Roller bellows air spring according to one of claims 1 to 9, characterised in that the rigid bellows wall portion (57; 62) is provided, on its free end, with a mounting bead (52; 64), which is surrounded by a circumferential flange (56) of the mounting fitting (54; 63).

## Revendications

1. Ressort pneumatique à soufflet à rebroussement, comprenant un soufflet à rebroussement réalisé en matière élastomère dans laquelle une couche porteuse de renfort (14) est noyée, soufflet dont chacune des deux extrémités est fixée à une ferrure et qui forme un pli de rebroussement (17, 28, 61) prenant appui contre une paroi et se modifiant lors de la contraction et de l'extension du ressort pneumatique à soufflet à rebroussement dans les conditions normales de travail,
caractérisé en ce que
une partie extrême du soufflet à rebroussement qui est tournée vers le pli de rebroussement (17, 28, 61) est constituée d'une partie de cloison du soufflet (15 ; 26) qui est fortement armée et qui est indéformable vis à vis de la pression intérieure du ressort pneumatique et de la contrainte extérieure exercée par le pli de rebroussement (17 ; 28) qui se déplace sur cette partie armée (15, 26) de la cloison du soufflet.

2. Ressort pneumatique à soufflet à rebroussement selon la revendication 1, caractérisé en ce que les deux parties extrêmes du soufflet à rebroussement comprennent des parties indéformables de cloison du soufflet qui sont fortement armées.

3. Ressort pneumatique à soufflet à rebroussement selon la revendication 1, caractérisé en ce que la longueur de la partie indéformable de la cloison du soufflet correspond au moins à la course d'élasticité du ressort pneumatique à soufflet à rebroussement.

4. Ressort pneumatique à soufflet à rebroussement selon la revendication 1 ou 2, caractérisé en ce que la partie indéformable (15 ; 26) de la cloison du soufflet comprend une hélice de fil métallique (16 ; 30) qui est noyée dans la matière élastomère.

5. Ressort pneumatique à soufflet à rebroussement selon l'une des revendications 1 à 3, caractérisé en ce que la partie indéformable (15) de la cloison du soufflet comprend une douille métallique cylindrique qui est noyée dans la matière élastomère.

6. Ressort pneumatique à soufflet à rebroussement selon la revendication 1 ou 2, comprenant deux couches de tissu noyées dans la cloison du soufflet sur la longueur totale du soufflet à rebroussement et formées de fils de corde textile inscrivant un angle avec l'axe longitudinal du soufflet à rebroussement, les fils de l'une des couches se croisant avec les fils de l'autre couche, caractérisé en ce que la partie indéformable (34) de la cloison du soufflet comprend une troisième couche de tissu (33),
en ce que la troisième couche de tissu (33) est disposée entre les deux couches de tissu (31, 32) comprenant des couches de fil qui se croisent,
en ce que les fils de corde de la troisième couche de tissu (33) est disposée sous un angle différent des positions angulaires des couches de tissu qui se croisent (31, 32), de préférence dans la direction de l'axe ou dans la direction de la circonférence.

7. Ressort pneumatique à soufflet à rebroussement selon l'une des revendications 1 à 6, caractérisé en ce qu'un anneau de renvoi (27 ; 60) est disposé dans la cloison du soufflet ou extérieurement contre la cloison du soufflet entre l'extrémité de la partie indéformable (26 ; 57) de la cloison du soufflet et le corps principal du soufflet à rebroussement qui est dans le prolongement de cette dernière.

8. Ressort pneumatique à soufflet à rebroussement selon l'une des revendications 1 à 7, caractérisé en ce qu'un anneau intérieur d'appui (65), dont la paroi annulaire est appliquée contre la partie indéformable (62) de la cloison du soufflet, est disposé dans la région de la partie indéformable (62) de la cloison du soufflet.

9. Ressort pneumatique à soufflet à rebroussement selon l'une des revendications 1 à 8, caractérisé en ce que l'enveloppe extérieure de la partie indéformable (15 ; 26 ; 57 ; 62) de la cloison du soufflet comporte une couche de réduction du frottement.

10. Ressort pneumatique à soufflet à rebroussement selon l'une des revendications 1 à 9, caractérisé en ce que la partie indéformable (57 ; 62) de la cloison du soufflet comporte à l'extrémité libre un bourrelet de fixation (52 ; 64) qui est enveloppé par un rebord rabattu circonférentiel de sertissage (56) de la ferrure de fixation (54 ; 63).
